# EUROPEAN PATENT APPLICATION

(11) **EP 2 138 356 A1**
(43) Date of publication of application: **30.12.2009**
(21) Application number: 09008151.4
(22) Date of filing: 22.06.2009
(51) Int. Cl.: B60R 19/00

(54) **Front vehicle structure, vehicle equipped therewith and method of providing the same**

(30) Priority: 26.06.2008 JP 2008167286; 26.06.2008 JP 2008167287; 26.06.2008 JP 2008167288; 26.06.2008 JP 2008167289; 26.06.2008 JP 2008167290
(71) Applicant: Mazda Motor Corporation, Aki-gun Hiroshima 730-8670 (JP)
(72) Inventor: Tanaka, Katsutoshi, Aki-gun Horishima 730-8670 (JP); Andou, Yasuyuki, Aki-gun Horishima 730-8670 (JP); Nakano, Kouichi, Aki-gun Horishima 730-8670 (JP); Nakatani, Shiro, Aki-gun Horishima 730-8670 (JP); Nakamura, Yukio, Aki-gun Horishima 730-8670 (JP); Maruko, Takao, Aki-gun Horishima 730-8670 (JP)
(74) Representative: Müller-Boré & Partner Patentanwälte

(57) **Abstract**

A single wire **215** is provided between a pair of front side frames **210** and a power plant **208**, respective front ends of which are coupled to front end portions of the pair of front side frames **210**. Accordingly, the impact load can be dispersed to the both-side front side frames in case the central portion of the vehicle front collides with the pole-shaped obstacle and the power plant can be suppressed from moving rearward.

## Description

The present invention relates to a front vehicle body structure, a vehicle equipped therewith and a method of providing the same and in particular relates to a front vehicle body structure which can improve the safety of a vehicle when a central portion of a vehicle front collides with a pole-shaped obstacle.

In general, a front portion of a vehicle body has a structure in which a bumper reinforcement which extends in a vehicle width direction is connected to a pair of front side frames at it both-side end portions, specifically, via crash cans. That is, the front vehicle body structure, in which the pair of front side frames functions as an impact absorbing member against the frontal collision of the vehicle, has been used.

Herein, the safety test against the vehicle frontal collision has been conducted in two manners. One is for a full-lap frontal collision, and the other is for an offset frontal collision. In the full-lap frontal collision test, the vehicle is made collide with a concrete wall obstacle at a specified speed. In the offset frontal collision test, one side portion of the vehicle (with a 40% overlap ratio) is made collide with a honeycomb-shaped wall obstacle.

Automotive companies have their own standards for the above-described full-lap and offset frontal collision tests, and they have been developed vehicles according to the standards.

There are various manners in the actual frontal-collision accidents. One example is a case in which the vehicle collides with an electric pole, a road-sign pole or the like which are provided at a road side. In case the side portion of the vehicle collides with such a pole-shaped obstacle from the vehicle front, the collision impact may be absorbed by one of the front side frames, like the above-described offset frontal collision test. In case the central portion of the vehicle front crashes against the pole-shaped obstacle, however, the bumper reinforcement may bends at its center because of its weak strength. Consequently, the both-side front side frames may not function properly, so that there is a concern that a large damage would be caused.

Japanese Patent Laid-Open Publication No. 2005-262951 discloses an impact load dispersing device which uses a tension maintaining mechanism with a compressive spring stored therein and a wire. This impact load dispersing device may function effectively for a relatively light collision in case of the full-lap frontal collision.

An object of the present invention is to provide a front vehicle body structure which can improve the safety for the passengers in case the central portion of the vehicle front collides with the pole-shaped obstacle.

The object is solved by the features of the independent claims. Preferred embodiments of the present invention are subject of the dependent claims.

According to the present invention, there is provided a front vehicle body structure, comprising a power plant provided in an engine room such as a combustion engine or an electric motor or hybrid power plant etc., a pair of front side frames provided at both sides of a vehicle body, preferably on a lower side, which extend in a longitudinal direction of the vehicle body so as to be connected or connectable to a vehicle floor on a rear side thereof, and a flexible tension member such as a wire, provided between the pair of front side frames and the power plant, respective ends of which are coupled to the pair of front side frames.

According to a preferred embodiment, front ends of said flexible tension member are coupled to front end portions of the pair of front side frames and/or said flexible tension member comprises a single tension member, both ends of which are coupled to said pair of front side frames, and/or the single flexible tension member (**60; 62**) extends behind the power plant.

Preferably, said flexible tension member comprises first and second split tension members which are separate from each other and positioned on both sides of the power plant, respective front ends of which are coupled to the pair of front side frames, preferably to front end portions thereof, and respective rear ends of which are coupled to the power plant directly or indirectly.

According to a further preferred embodiment, said power plant being mounted at said front side frames directly or indirectly via mount members and/or the rear ends of the first and second split tension members are coupled either to said mount members or to said power plant directly, wherein preferably a rear end of one of said first and second split tension members is coupled to said power plant and a rear end of the other of the first and second split tension members is coupled to one of said mount members of said power plant.

Further preferred, said flexible tension member comprises two sets of flexible tension members which are preferably positioned on an upper side and a lower side of the vehicle body, each set of which is provided between the pair of front side frames and the power plant, wherein said two sets of flexible tension members comprise a single tension member, respectively, or one, preferably said upper-side positioned flexible tension member comprises a single tension member, and the other, preferably said lower-side positioned flexible tension member comprises first and second split tension members which are separate from each other or said two sets of flexible tension members comprise first and second split tension members, respectively, which are separate from each other and positioned on both sides of the power plant.

Preferably, said pair of front side frames has a closed cross section and/or at least a lower-side positioned flexible tension member is coupled to a rear end portion of said power plant, and/or at least the lower-side positioned flexible tension member extends in substantially V shape in a plan view.

Further preferred, the front vehicle body structure further comprises a sub frame which extends in the vehicle width direction preferably between rear end portions of said pair of front side frames, and a first mount member which mounts a rear end portion of the power plant at the sub frame, wherein said lower-side positioned flexible tension member comprises first and second split tension members which are separate from each other and positioned on both sides of the power plant, respective front ends of which are coupled to front end portions of the pair of front side frames and respective rear ends of which are coupled to said first mount member.

Preferably, the front vehicle body structure further comprises second and third mount members which mount the power plant at the pair of front side frames, respectively, wherein preferably said upper-side positioned flexible tension member comprises first and second split tension members which are separate from each other and positioned on both sides of the power plant, respective rear ends of which are coupled to the second and third mount members, respectively.

Further preferred, said flexible tension member extends substantially in parallel to an axis line of the front side frames in a side view of the vehicle body or said flexible tension member comprises two sets of flexible tension members which are preferably positioned on an upper side and a lower side of the vehicle body, and at least one of said two sets of flexible tension members extends substantially in parallel to the axis line of the front side frames in the side view of the vehicle body.

According to an embodiment of the present invention, at least one of the front ends of the flexible tension members is coupled to the front side frame, preferable the front end portion, via a (long) bolt which penetrates through the front side frame preferably having a closed cross section. Thereby, the impact load which is transmitted to the front side frame via the tension member can be dispersed to upper and lower portions of the closed cross section of the front side frame. Accordingly, without causing any local breakage of the front end portion of the front side frame, the shock absorbing function of the front side frames with the original crash can be performed.

According to another embodiment of the present invention, the flexible tension member comprises two sets of flexible tension members, and the (long) bolt is provided so as to penetrate through at least one of the front side frames, preferably a front end portions thereof, in such a manner that at least one side of the front ends of the upper-side positioned flexible tension member and the lower-side positioned flexible tension member are coupled to the front side frame via an upper portion of the bolt and a lower portion of the bolt, respectively, the upper potion of the bolt projecting upward from an upper face of the front side frame, the lower portion of the bolt projecting downward from a lower face of the front side frame. Thereby, any improper move of the power plant, in particular, the rearward rotation of the power plant including the lateral disposition type of engine, which may be caused by the upper and lower tension members when the pole-shaped obstacle comes into the engine room at the vehicle frontal collision and hits against the power plant, can be suppressed properly.

According to another embodiment of the present invention, at least one of the front ends of the flexible tension members has a ring-shaped terminal portion, and the bolt is provided so as to penetrate through the ring-shaped portion and the front side frame, whereby at least one of the front ends of the flexible tension members is coupled to the front side frame via the bolt. Thereby, the front end of the tension member can be coupled to the front side frame surely.

According to another embodiment of the present invention, the power plant comprises a multi-cylinder reciprocating engine, and the flexible tension member is positioned at a level which substantially corresponds to a specified portion located between a crank case and a cylinder head of the engine. Thereby, the impact load via the flexible tension member can be inputted along the axis line of the front side frame, so that the impact load can be inputted in the crash direction of the front side frame properly.

Moreover, the present invention provides a vehicle having a front vehicle body structure as described above.

Finally, the present invention provides a method of providing a front vehicle body structure comprising the steps of:
providing a power plant in an engine room;
providing a pair of front side frames at both sides of a vehicle body, such that it extends in a longitudinal direction of the vehicle body; and
providing a flexible tension member between the pair of front side frames and the power plant, and coupling respective ends of which to the pair of front side frames.

Other features, aspects, and advantages of the present invention will become apparent from the following description which refers to the accompanying drawings.
FIG. **1** is a diagram showing an example of a preferred embodiment of the present invention.
FIG. **2** is a diagram showing another example of a preferred embodiment of the present invention.
FIG. **3** is a diagram showing further another example of a preferred embodiment of the present invention.
FIG. **4** is a diagram showing further another example of a preferred embodiment of the present invention in which two sets of upper and lower wires (flexible tension members) are disposed.
FIG. **5** is a view of an engine room according to a first embodiment, when viewed obliquely from above.
FIG. **6** is a view of the engine room according to the first embodiment, when viewed from side.
FIG. **7** is a perspective view showing an example according to the first embodiment, in which a front end of the wire has a single-lock terminal, and the front end of the wire is fixed to a front side frame via a long bolt for attaching a sub frame to the front side frame.
FIG. **8** is a view of a power plant according to the first embodiment, when viewed from rear, for explaining guide members to dispose upper and lower wires.
FIG. **9** is a view of an example of the guide member according to the first embodiment.
FIG. **10** is a view of another example of the guide member according to the first embodiment.
FIG. **11** is a side view of a modified embodiment of the first embodiment, in which the upper and lower wires are disposed in parallel to an axis line of the front side frame.
FIG. **12** is a view of an engine room according to a second embodiment, when viewed from above.
FIG. **13** is a view of the engine room according to the second embodiment, when viewed from side.
FIG. **14** is a view of the engine room according to the second embodiment, when viewed from below.
FIG. **15** is a view showing an example according to the second embodiment, in which a lower wire engages with a first mount member which mounts a rear portion of a power plant at a sub frame.
FIG. **16** is a view showing an example of a coupling method of a rear end of a lower split wire to the first mount member of FIG. **15****.**
FIG. **17** is a view showing the example of the coupling method of the rear end of the lower split wire to the first mount member of FIG. **16****.**
FIG. **18** is a view of an engine room according to a third embodiment, when viewed from above.
FIG. **19** is a view of the engine room according to the third embodiment, when viewed obliquely from rear.
FIG. **20** is a view of an engine room according to a fourth embodiment, when viewed from side.
FIG. 21 is a perspective view showing an example according to the fourth embodiment, in which a rear end of an upper split wire is coupled to a second mount member which mounts an end face of the lateral disposition type of engine of the power plant at the front side frame.
FIG. **22** is a sectional view taken along line X18-X18 of FIG. **21****.**
FIG. **23** is a view of the engine room according to a fifth embodiment, when viewed obliquely from front.
FIG. **24** is a view explaining an example according to the fifth embodiment, in which the power plant is mounted at the front side frame via a third engine mount member which is coupled to a bracket provided on an upper face of a transmission case of a transaxle of the power plant, and a rear end of the upper split wire is fixed with a bolt for fixing the bracket to the transmission case.
FIG. **25** is a view of an engine room according to a sixth embodiment, when viewed obliquely from above.
FIG. **26** is a view of the engine room according to the sixth embodiment, when viewed from side.

Hereinafter, preferred embodiments of the present invention will be described referring to the accompanying drawings. Although the embodiments are described separately, it is clear to the skilled person that single features of one embodiment may be applied and/or replaced with corresponding features of another embodiment.

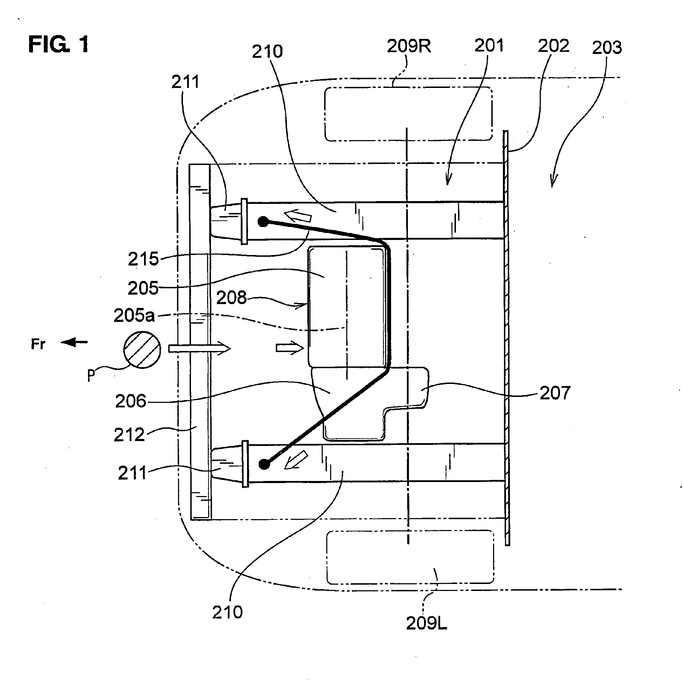

FIGS. **1** through **4** are diagrams which explain examples of preferred embodiments of the present invention. In these figures, reference numeral **201** denotes an engine room at a front vehicle body. The engine room **201** is preferably partitioned from a vehicle compartment by a dash panel **202**. In the engine room **201,** there is provided a power plant **208** which comprises preferably a multi-cylinder reciprocating engine **205,** an automatic transmission **206,** and a differential gear **207,** for example. An output of the power plant **208** is preferably distributed to both front wheels **209** via the differential gear **207.** Herein, a so-called lateral disposition type of engine, in which an output shaft **205a** of the engine **205** extends in a vehicle width direction, is shown in the figures. However, the present invention is applicable to a so-called longitudinal disposition type of engine, in which the output shaft **205a** of the engine **205** extends in a longitudinal direction, or a four-wheel drive type of vehicle as well.

A pair of front side frames **210** is disposed on both (right and left) sides of the engine room **201** so as to extend in the longitudinal direction. The power plant **208** is preferably mounted at the front side frames **210** directly or indirectly. A bumper reinforcement **212** is preferably fixed to front ends of the front side frames **210** via crash cans **211.** The bumper reinforcement **212** preferably extends in the vehicle width direction.

A wire **215,** as a flexible tension member, is fixed to the front side frames **210,** preferably at its front end portions. The wire **215** is provided between the pair of front side frames **210** and the power plant **208.** In other words, the wire **215** extends preferably forward from both sides of the power plant **208** in a plan view, and the front ends of the wire **215** are preferably fixed to front end portions of the front side frames **210.** Herein, the "front end portion" of the front side frame according to the present invention means a "specified portion" of the front side frame which is positioned in front of the power plant **208** and provides an enough crash of the front side frame **210** in its axial direction at the vehicle frontal collision (full-overlap collision, offset collision), and thereby it is not necessarily limited to a portion near the front end of the front side frame **210.**

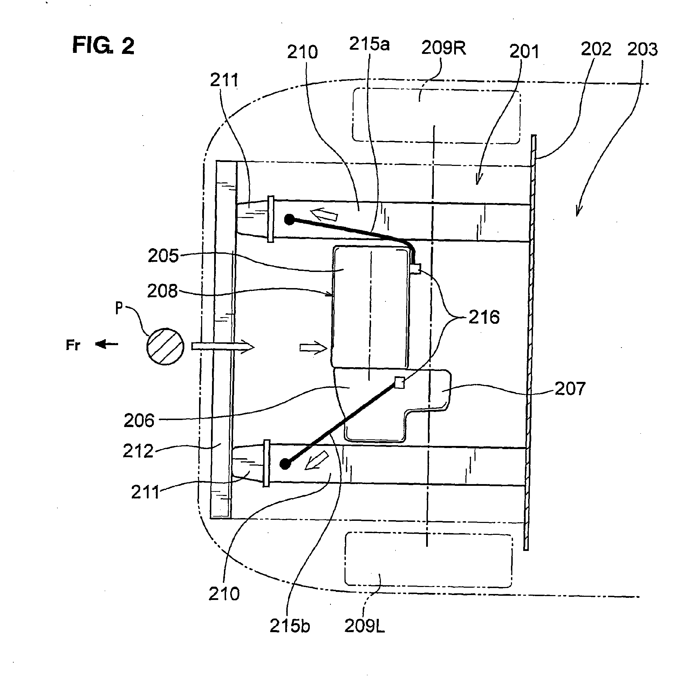

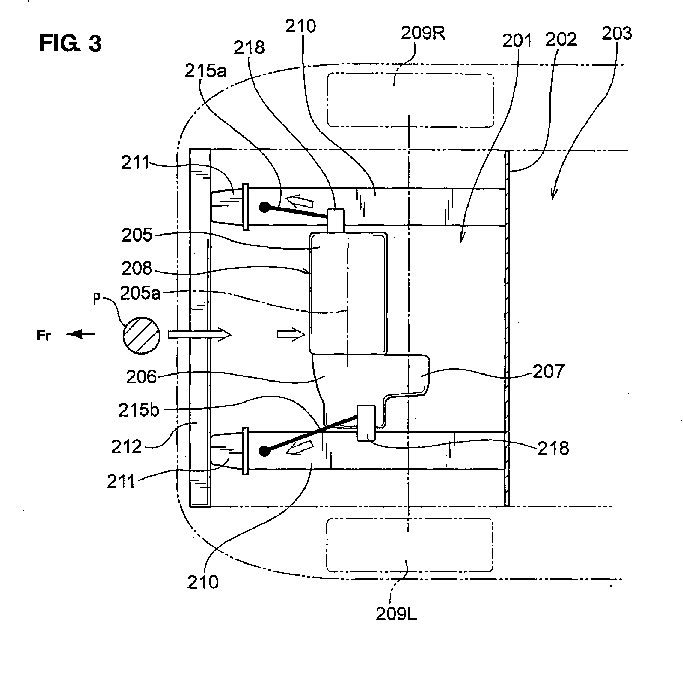

This wire **215** may be comprised of a single wire which extends behind the power plant **208** (FIG. **1**). Or, as shown in FIGS. **2** and **3**, the wire may be comprised of two split wires **215a, 215b** which are positioned on both sides of the power plant **208.** Herein, respective rear ends of the right and left split wires **215a, 215b** may be coupled to elements **216,** such as eye bolts fixed to the power plant **208,** fixing tools fixed with bolts, fixing portion integrally formed at the power plant **208,** or mount members **218** which mount the power plant **208** at the front side frames directly or indirectly. In case of an indirect mount, the mount member may be configured to mount the power plant **218** at a sub frame which is attached to the front side frames **210.** Of course, one of the split wires **215a, 215b** may be coupled to the fixing element **216,** and the other may be coupled to the mount member **218.**

In the above-described examples, at the vehicle frontal collision, in particular, when the central portion of the vehicle front collides with a pole-shaped obstacle **P** which has a relatively narrow width, the pole **P** comes into the engine room **201** and pushes the power plant **208** rearward. Herein, since the wire **215** is provided between the pair of front side frames **210** and the power plant **208,** the impact load from the pole **P** can be properly dispersed to the both-side front side frames **210** via the wire **215.** Further, since the input position of the impact load to the front side frames **210** via the wire **215** is located at the specified portion which is positioned in front of the power plant **208** and provides the enough crash of the front side frame **210** in its axial direction as described above, the shock absorbing function of the front side frames **210** can be achieved properly. Moreover, since the wire suppresses the power plant **208** from moving rearward, the power plant **208** can be properly prevented from coming into a vehicle compartment **203.**

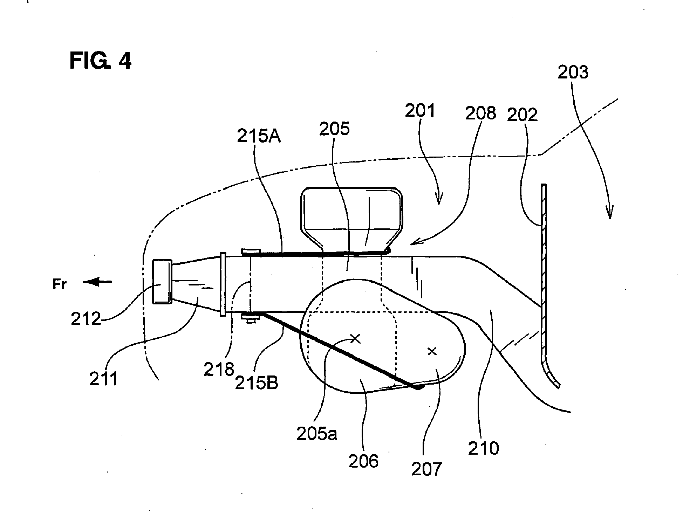

The wire **215** may be comprised of two sets of wires which are respectively positioned on an upper side and a lower side of the vehicle body as shown in FIG. **4****.** Herein, the variation of how each wire is provided between the pair of front side frames **210** and the power plant **208** may be selectable from the above-described manners shown in FIGS. **1** through **3****.** Further, it may be preferable that an upper wire **215A** be positioned at a level higher than an engine output shaft **205a** so as to extend horizontally in the side view. This layout can properly suppress the power plant **208** from falling down rearward when the pole **P** hits the power plant **208.** Meanwhile, it may be preferable that a lower wire **215B** be positioned below the engine output shaft **205a** so as to extend "in parallel" to an axis line of the front side frame **210** in the side view. Herein, the "in parallel" to the axis line of the front side frame **210** means a technical situation in which the impact load applied via the lower wire **215B** is inputted into a crash direction of the front side frame **210** which has been designed. Thus, the meaning of this "in parallel" should not be construed from the geometrical sense. In some cases, the axis line of the front side frame is slightly curved in the side view. In this case, the manner of the layout of the wire in which the direction of extension of the lower wire **215B** is identical to the direction of the efficient crash of the front side frame which can perform the effective shock absorption is covered by the meaning scope of the "in parallel" of the present invention.

A rotational move of the power plant **208** with its lower end moving rearward from its upper end may be suppressed by the disposition of the upper and lower wires **215A, 215B** when the pole **P** hits against the power plant **208.** Further, the lower wire **215B** may be preferably disposed so as to extend at a lower face of the power plant **208** (FIG. **4**).

The front end of the wire **215** may be preferably coupled to the front side frame **210** via a fixing tool such as a substantially vertical bolt **218** which penetrates the frame **210** substantially vertically. Further, in case the upper and lower wires **215A, 215B** are provided, the upper wire **215A** may be preferably coupled to an upper portion of the substantially vertical bolt **218** which projects upward from an upper face of the front side frame **210,** while the lower wire **215B** may be preferably coupled to a lower portion of the substantially vertical bolt **218** which projects downward from a lower face of the front side frame **210.**

According to the present invention, by additionally providing the flexible tension member such as the wire **215,** the safety against the frontal collision in which the central portion of the vehicle front collides with any obstacle like the pole P can be improved, without changing the basic structure of the vehicle body.

### EMBODIMENT 1

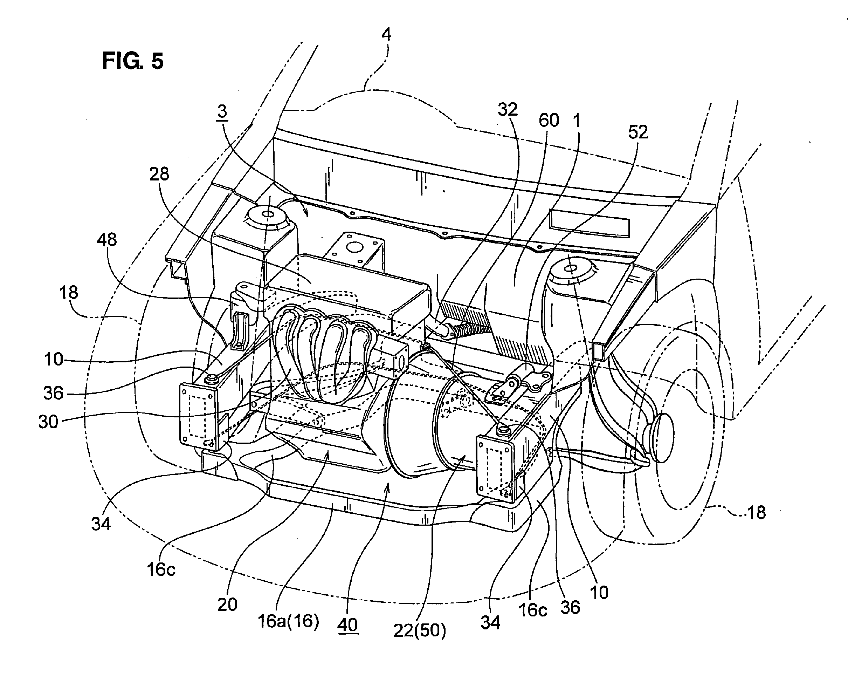

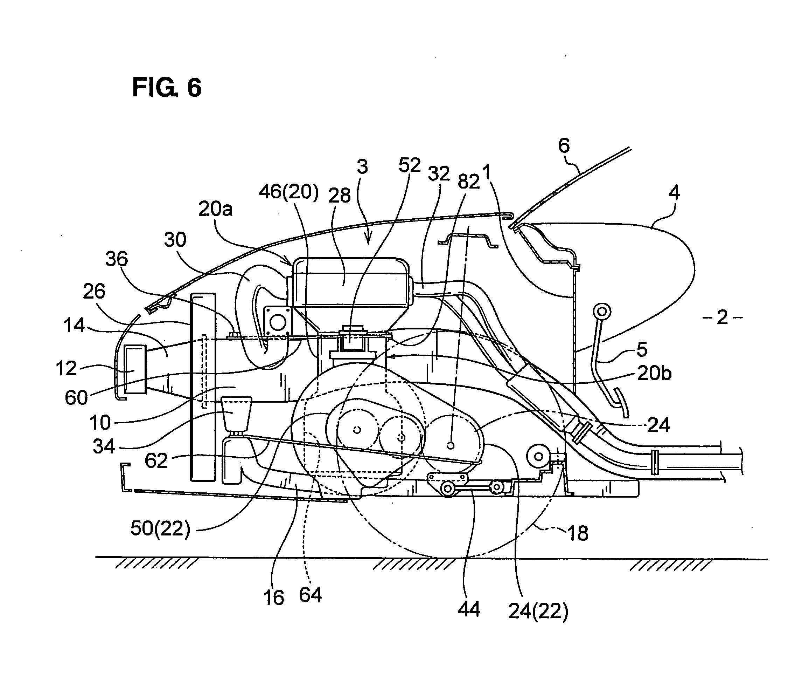

A first embodiment will be described referring to FIGS. **5** through **11****.** A reference numeral **1** denotes a dash panel, which partitions a vehicle compartment **2** from an engine room **3.** An instrument panel **4,** a brake pedal **5,** an accelerator pedal and the like are provided in the vehicle compartment **2**. A reference numeral **6** denotes a windshield. FIG. **5** is a view of the engine room **3**, when viewed obliquely from above. FIG. **6** is a view of the engine room **3,** when viewed from side. A pair of right and left front side frames **10** is preferably disposed in a lower area of the engine room **3** so as to extend substantially in the longitudinal direction over a whole area of the engine room **3.** The front side frames **10** preferably have a substantially rectangular structure with a closed cross section. A bumper reinforcement **12** which extends substantially in the vehicle width direction is connected to a front end of the front side frames **10,** preferably via crash cans **14.** In FIG. **5****,** the engine room **3** is illustrated, omitting illustrations of the bumper reinforcement **12** and the crash cans **14.** A sub frame **16** is also disposed in the lower area of the engine room **3** at a position below the front side frames **10.** A reference numeral **18** denotes a front wheel.

An engine **20,** a water-cooling four-cylinder inline engine, is disposed in the engine room **3** in such a manner that an engine output shaft is disposed in the vehicle width direction (FIG. **5**). That is, the engine **20** is a lateral disposition type of reciprocating engine. A transaxle **22** is coupled to a rear end of the engine **20,** the engine and the transaxle **22** are disposed in the vehicle width direction, and the engine output is distributed to the both front wheels **18** via a differential gear **24** which is stored inside the transaxle **22.** This automotive vehicle is a front-wheel drive type of vehicle, but the present invention is applicable to a rear-wheel drive type vehicle and a four-wheel drive type of vehicle as well. The engine **20** is preferably a water cooling type of engine, in which a coolant of the engine **20** is cooled by a radiator (not illustrated) which is preferably fixed to a shroud panel **26** disposed between both-side front end portions of the front side frames **10.**

In the lateral disposition type of engine **20**, the air intake is conducted from its front face **20a,** and the gas exhaustion is conducted from its rear face **20b.** That is, this engine **20** adopts the front air intake and the rear gas exhaustion (FIG. **6**), so an intake pipe **30** is connected to a front face of a cylinder head **28** and an exhaust pipe **32** is connected to a rear face of the cylinder head **28.** The sub frame **16** is preferably comprised of a substantially square perimeter frame which includes front and rear portions **16a, 16b** which respectively extend in the vehicle width direction between front ends and rear ends of the both-side front side frames **10,** and right and left side portions **16c** which respectively extend along the both-side front side frames **10.**

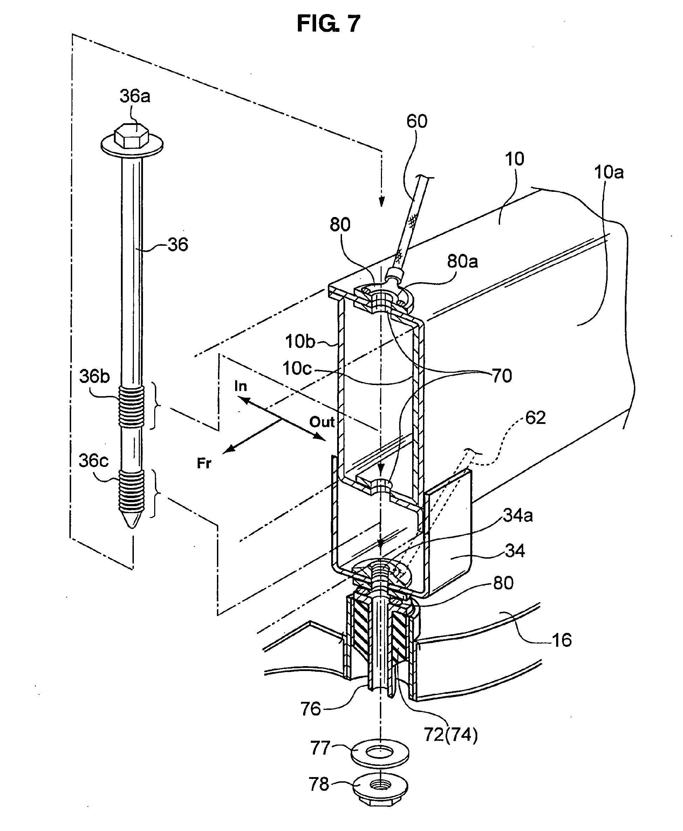

Referring to FIG. **6****,** at a front end portion of the front side frames **10** are preferably provided brackets **34** for the perimeter frame which extend downward. The sub frame **16** is fixed to lower ends of the brackets **34** for the perimeter frame via (long) bolts **36** (FIGS. **5** and **7**).

A power plant **40** which includes the engine **20** and the transaxle **22** is mounted in the engine room **3**, preferably via a first mount member **44,** a second mount member **48,** and a third mount member **52.** Herein, the first mount member **44** is disposed between a rear portion **16b** of the sub frame **16** and a lower face of a case **42** of the differential gear **24.** The second mount frame **48** is disposed between an upper face of one of the front side frames **10** and a cylinder block **46.** The third mount member **52** is disposed between an upper face of the other of the front side frames **10** and an upper face of a transmission case **50** of the transaxle **22.**

Herein, an upper wire **60** and a lower wire **62,** which are comprised of a single wire respectively, are provided between the front side frames **10** and the power plant **40.** The upper wire **60** extends behind the engine **20** at a position between the cylinder block **46,** i.e., a crank case **64,** and the cylinder head **28,** and then extends forward. Both-side front ends of the upper wire **60** are respectively coupled to upper ends of the long bolts **36** which penetrate the front side frames **10.**

Meanwhile, the lower wire **62** extends preferably behind the crank case **64,** the differential gear case **42,** and the transmission case **50,** and then extends forward. Both-side front ends of the lower wire **62** are respectively coupled to lower ends of the long bolts **36** which penetrate the front side frames **10.** Thus, the front ends of the both wires **60, 62** are coupled to the front end portions of the front side frames **10** by using the long bolt **36** which attaches the sub frame **16** to the front side frames **10.** Herein, it may be preferable that the front end portions of the front side frames **10** be reinforced with reinforcements.

FIG. **7** shows a specific example of the preferred coupling of the front ends of the upper and lower wires **60, 62** to the front side frames **10.** The front side frame **10** is comprised of an outer **10a** and an inner **10b** which form a structure with a vertically-long substantially closed cross section. Inside this closed cross section structure is provided a reinforcement **10c** with a U-shaped cross section. The upper and lower walls of the front side frame **10** and the reinforcement **10c** have bolt through holes **70.** The long bolt **36** is inserted into the bolt holes. Further, a bracket **34** which extends downward is attached, preferably welded, to the front end portion of the front side frame **10,** and the sub frame **16** is provided at a lower end face of the bracket **34.** The long bolt **36** extends substantially vertically so as to fix the sub frame **16** to the front side frame **10.** This long bolt **36** has a bolt head **36a** and first and second threads **36b, 36c** at its lower end portion. Meanwhile, the front side frame **10** has the bolt through holes, and the bracket **34** has a thread **34a** which is to engage with the first thread **36b** of the long bolt **36.** A mount member **74** with a rubber bush **72** is fixed to the sub frame **16.** The mount member **74** has a center sleeve **76** which extends vertically.

As apparent from FIG. **7**, the front ends of the upper and lower wires **60, 62** have terminals of single locks **80,** respectively. Each single lock **80** has an eye **80a** into which the long bolt **36** is inserted. A nut **78** is fastened to the long bolt **36** with a large-diameter washer **77**, so that the upper and lower wires **60, 62** are coupled to the front side frames **10.** Herein, the front end of the upper wire **60** is disposed at the upper face of the front side frame **10,** and the front end of the lower wire **62** is disposed between the bracket **34** and the sub frame **16.**

When the impact load is inputted to the front side frames **10** via the upper and lower wires **60, 62,** since the specified portion of each of the front side frames **10** where the impact load is inputted is reinforced by the reinforcements **10c,** the impact load is dispersed to the three sides of the four sides of the closed cross section of the front side frame **10** by the reinforcement **10c.** Accordingly, the front side frames **10** crash effectively, so that the front side frames **10** can perform the shock absorbing function properly. Further, since the impact load is inputted to the front side frames **10** with the vertically-long closed cross section structure via the upper and lower wires **60, 62** and the long bolts **36** which penetrate the front side frames **10** vertically. In other words, compared to a case in which the long bolts **36** are provided so as to penetrate the front side frames **10** laterally (horizontally), the bolt through holes **70** and the corner portions of the front side frame **10** are located so close to each other that the portion around the bolt through holes **70** can be prevented from being broken or cracked (torn). Accordingly, the impact load inputted from the long bolts **36** can be transmitted to the front side frames **10** effectively.

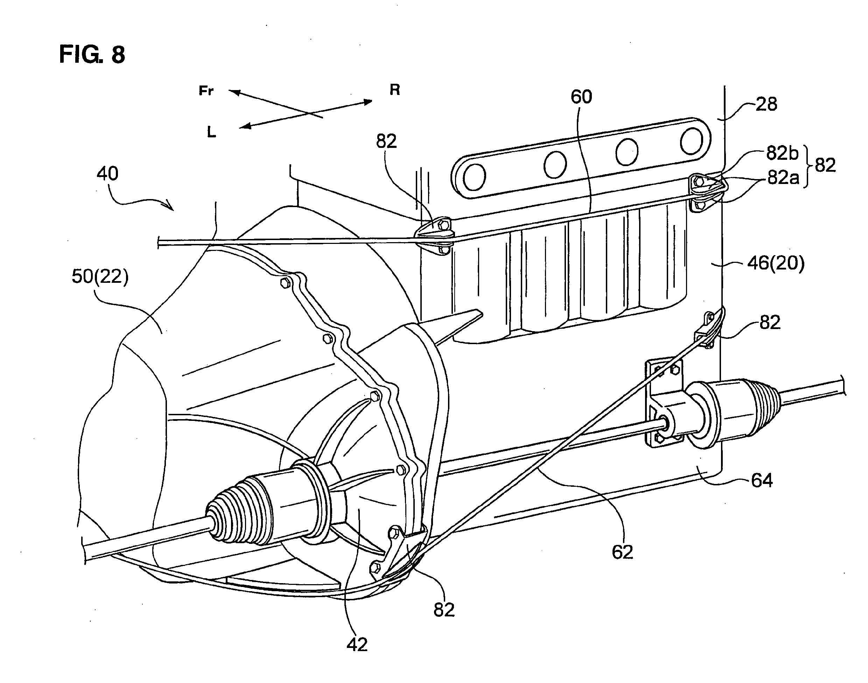

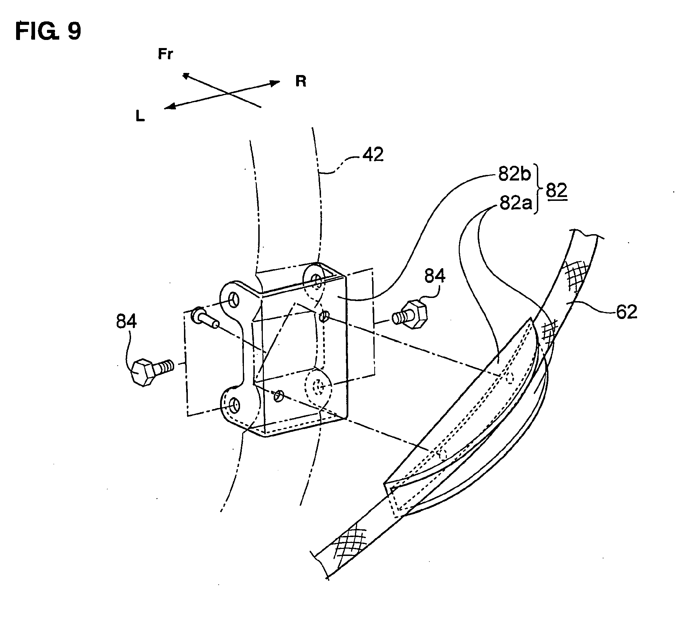

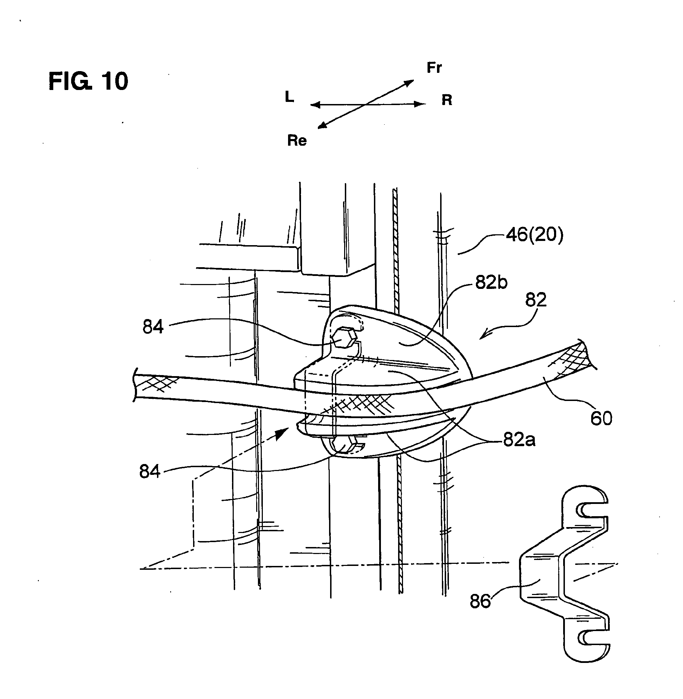

The layout of the upper and lower wires **60, 62** is positioned by guide members **82** as apparent from FIG. **8****.** The guide member **82** has preferably two walls **82a,** and each wire of the wires **60, 62** is positioned between these walls **82a.** The walls **82** may be formed integrally with a body **82b** of the guide member **82,** or these are formed separately as shown in FIG. **9****.** The guide member **82** is fixed to the power plant **40** with a bolt **84.** It may be preferable that the guide member **82** be covered with a cap **86** (FIG. **10**) after setting the upper or lower wire **60, 62.** Thereby, the wires **60, 62** can be prevented from being detached off the guide member **82** during the move of the power plant **40.**

The upper wire **60** extends behind the upper end portion of the cylinder block **46** of the engine **20,** and its one end extends forward along a front end face of the engine, an opposite end face to the transaxle **22,** while its other end extends forward above the transaxle **22.** Both front ends of the upper wire **60** are coupled to the front end portions of the both front side frames **10.** The upper wire **60** is, as apparent from FIG. **6****,** positioned substantially in parallel to the axis line of the front side frame **10**. Meanwhile, the lower wire **62** extends behind the transaxle **22** and the crank case **64,** and its both ends extend forward and are fixed to the portion between the bracket **34** at the front end portion of the front side frame **10** and sub frame **16.** The lower wire **62** is positioned so as to extend in a lower area below the engine output shaft **20c** (FIG. **6**).

When the vehicle frontal collision occurs, the obstacle, such as the pole, collides with a central portion of the bumper reinforcement **12,** the bumper reinforcement **12** bends at this central portion, and this obstacle comes into the engine room **3** and then hits against the power plant **40,** this impact load can be properly dispersed to the front end portions of the front side frames **10** via the upper and lower wires **60, 62.** Herein, since the front side frames **10** originally have the shock absorbing function against the general vehicle frontal collision, the impact load which is caused by the above-described collision with the pole-shaped obstacle via the wires **60, 62** can be absorbed properly by the front side frames **10.** Further, the power plant **40** can be suppressed by the wires **60, 62** from moving rearward.

Of course, the above-described advantage of the impact load absorption can be achieved without applying any particular change to the basic structure design against the full-lap frontal collision or the offset frontal collision. Further, the rearward move of the power plant **40** can be properly received by the upper and lower wires **60, 62,** so that the rotation of the power plant **40** in the side view can be suppressed. Thereby, the input of the impact load to the front side frames **10** via the wires **60, 62** can be made properly prompt.

Further, since the upper and lower wires **60, 62** are coupled to the front side frames **10** via the long bolts **36** which penetrate the front side frames **10** for fixing the sub frame **16,** not only any other particular member for coupling the front ends of the wires **60, 62** to the front side frames **10** may not be necessary, but the impact load can be dispersed to the sub frame **16** as well as the front side frames **10.**

Moreover, since the structure of fixing the wires **60, 62** to the front side frames **10** by using the member (long bolt **36**) which penetrates the front side frame **10** with the closed cross section is applied, the impact load from the wires **60, 62** can be dispersed to both of the upper and lower faces of the front side frames **10.** Thereby, any local breakage of the front side frames **10** or any unexpected deformation (crash) of the front end portions of the front side frames **10** which may be caused by the inputted load from the wires **60, 62** can be properly prevented. Accordingly, the shock absorbing function of the front side frames **10** with the original crash can be performed.

Further, since the front ends of the lower wire **62** are coupled to the portions between the brackets **34** which extend downward from the front end portions of the front side frames **10** and the sub frame **16,** the disposition of the lower wire **62** below the engine output shaft **20c** can be facilitated, and the lower wire **62** can be disposed substantially in parallel to the axis line of the front side frames **10.** Accordingly, the direction of the impact load which acts on the front side frames **10** via the lower wire **62** can be almost in parallel to the front side frames **10.** In other words, any unexpected deformation (crash) of the front side frames **10** which may be caused by any component force of the impact load can be prevented properly from occurring. Thus, the shock absorbing function of the front side frames **10** with the original crash can be performed. Of course, since the input direction to the front side frames **10** is made in parallel to the front side frames **10** by disposing the upper wire **60** so as to extend behind the upper end portion of the cylinder block **46,** the shock absorbing function of the front side frames **10** with the original crash can be performed. Since the front ends of the upper and lower wires **60, 62** have the terminals of the single locks **80** which do not have any side projecting portion, the front ends of the wires **60, 62** may not interfere with the front side frames **10.**

In the present invention, two wires **60, 62** may not be necessary, but only any one of wires **60** or **62** can be applied properly.

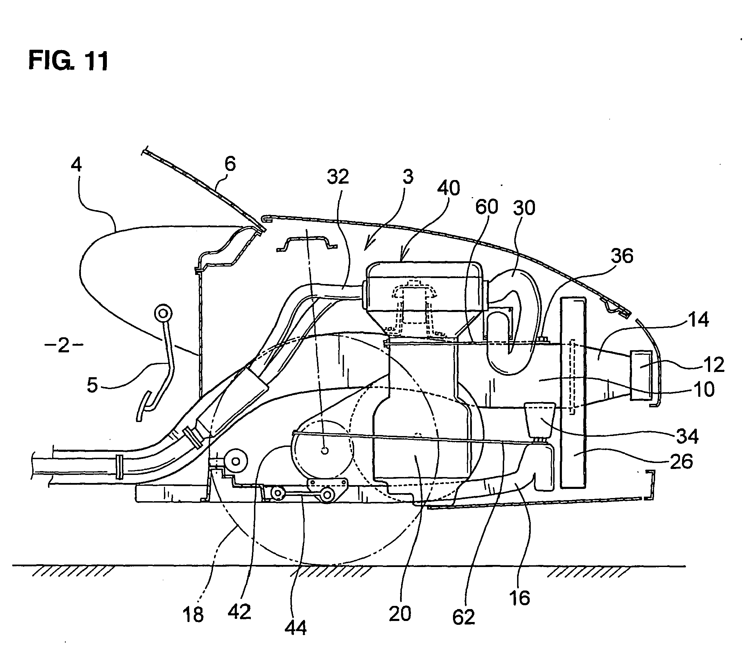

FIG. **11** shows a modified embodiment of the first embodiment. As apparent from FIG. **11****,** the lower wire **62** may be disposed substantially in parallel to the axis line of the front side frames **10.**

### EMBODIMENT 2

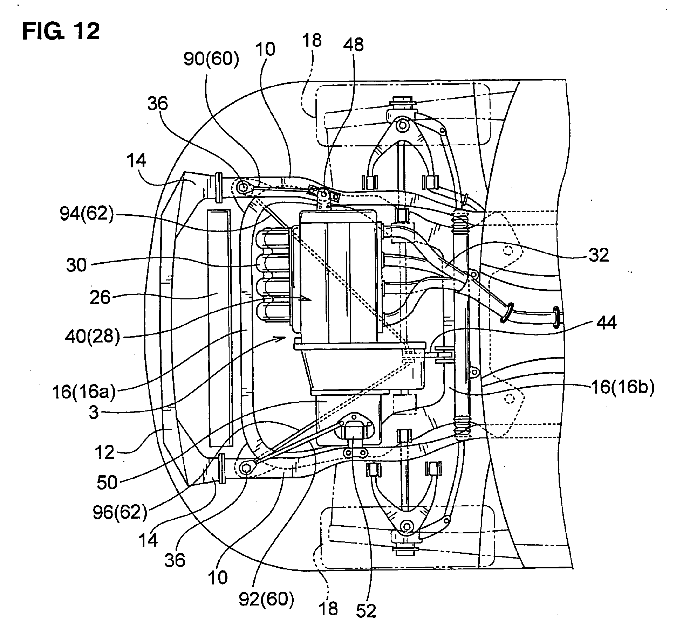

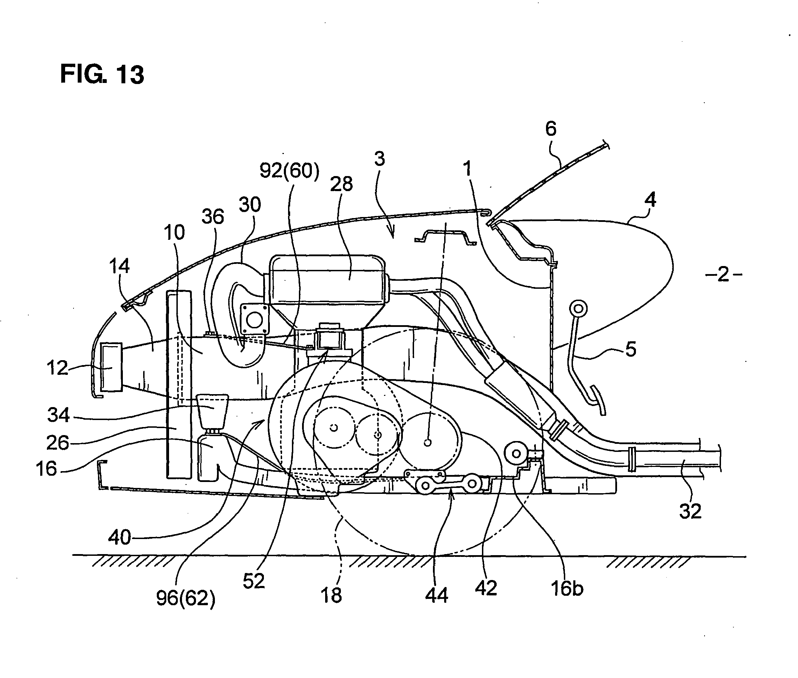

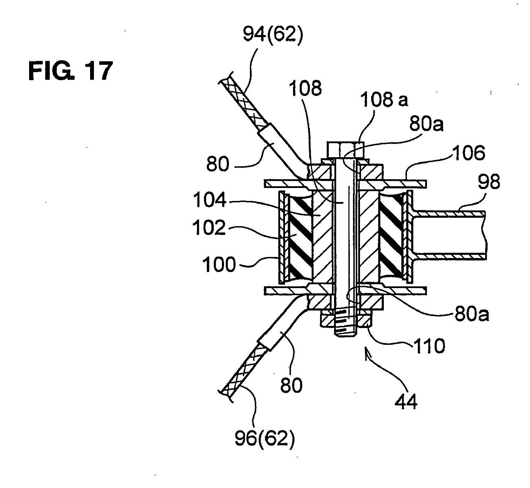

A second embodiment will be described referring to FIGS. **12** through **17**. The same elements as those of the first embodiment are denoted by the same reference numerals, descriptions of which are omitted here.

The upper wire **60** is comprised of first and second split wires **90, 92.** Rear ends of these are preferably coupled to second and third mount members **48, 52**, thereby coupled to the power plant **40** indirectly via the mount members **48, 52**. Herein, the second and third mount members **48, 52** are preferably a rigidity member which is directly related to the power plant **40,** so the power plant related to the flexible tension member according to the present invention includes the second and third mount members **48, 52.**

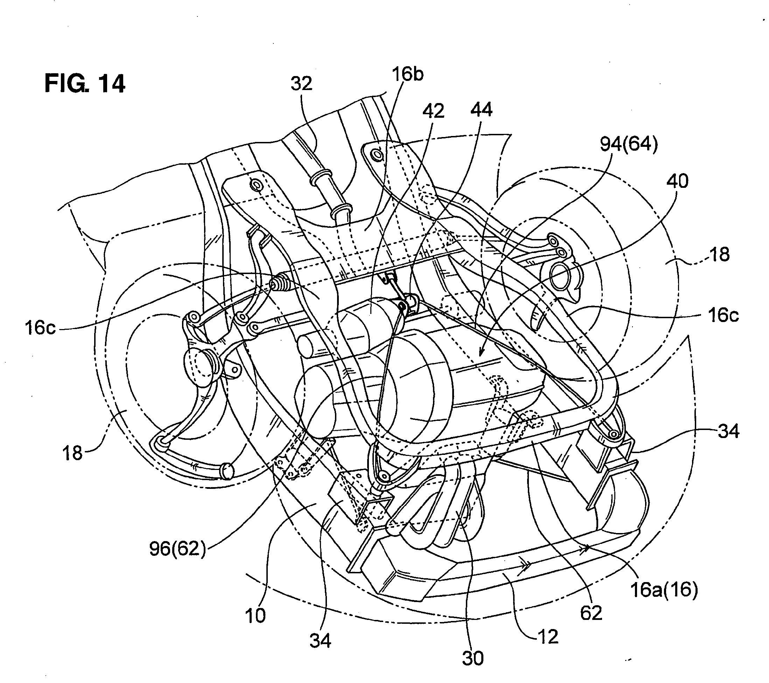

As apparent from FIG. **14** which shows a bottom view of the engine room, the lower wire **62** is comprised of first and second split wires **94, 96.** These slit wires **94, 96** extend below a lower face of the power plant **40.** Rear ends of these wires **94, 96** are coupled to a first mount member **44,** thereby coupled to the power plant **40** indirectly via the first mount member **44.** Likewise, the first mount member **44** is a rigidity member which is directly related to the power plant **40,** so the power plant related to the flexible tension member according to the present invention includes the first mount member **44.**

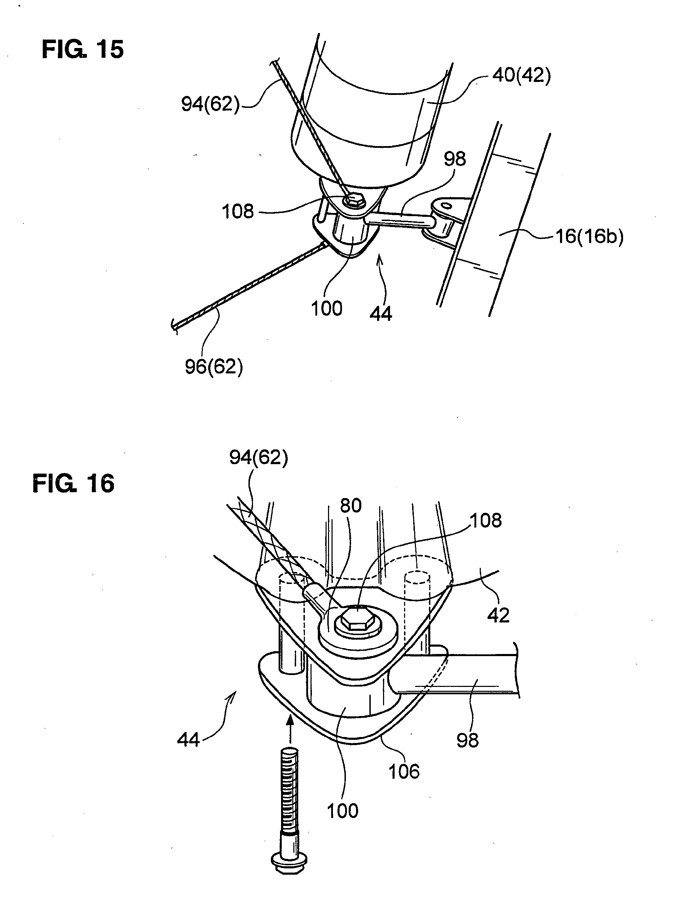

FIGS. **15** through **17** are specific views of the first mount member **44.** The first mount member **44** preferably has a sleeve **100** at a tip of a swing arm **98** which extends preferably forward from a rear portion **16b** of the sub frame **16.** The sleeve **100** is preferably connected to an axis portion **104** via a rubber **102.** The axis portion **104** is preferably fixed to a bracket **106** which is connected to the power plant **40** with a bolt **108** and a nut **110.** Rear ends of the first and second split wires **94, 96** have the single locks **80.** The bolt **108** is inserted into the eyes **80a** (FIG. **16**) of the single locks **80.** Thereby, the rear ends of the first and second split wires **94, 96** are coupled to the power plant **40** via the first mount member **44.** Herein, it may be preferable that the rear end of one of the wires **94** be disposed near a bolt head **108a,** and the rear end of the other **96** be disposed near the nut **110** as apparent from FIG. **12****.**

According to the second embodiment, the lower wire **62** is disposed in a V shape along the lower face of the power plant **40** as shown. Thereby, the rearward move of the power plant **40** can be received properly and also the rotation of the power plant **40** in the side view can be suppressed. Accordingly, the delay of input of the impact load to the front side frames **10** via the lower wire **62** can be prevented. While the both of the upper and lower wires **60, 62** are comprised of two split wires in the second embodiment, one of those may be comprised of two split wire, and the other may be comprised of a single wire as described in the above-described first embodiment.

### EMBODIMENT 3

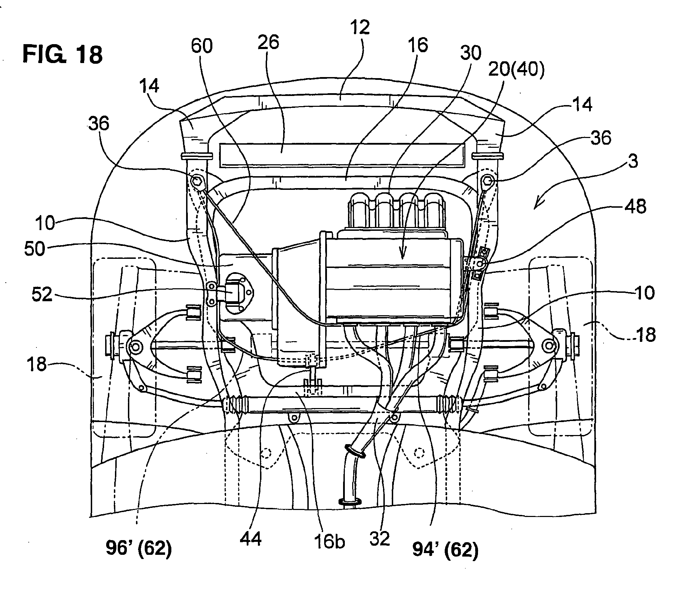

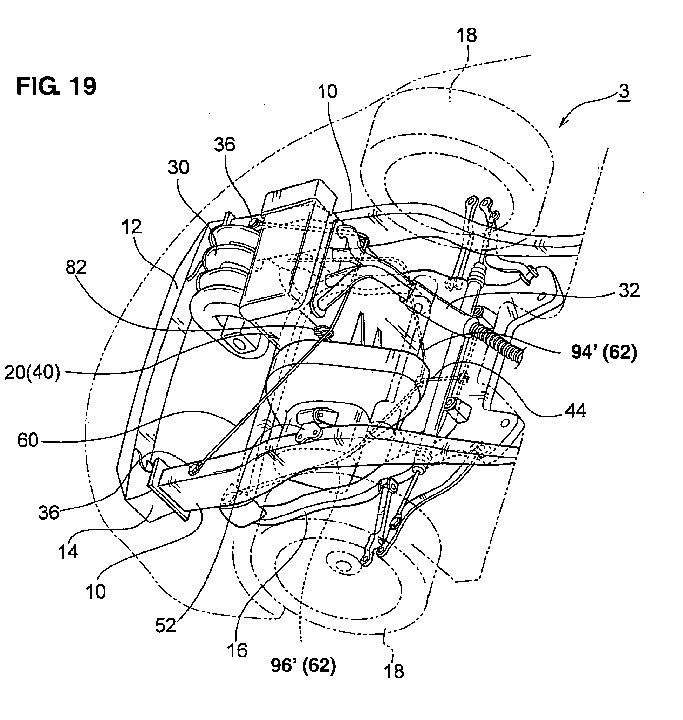

A third embodiment will be described referring to FIGS. **18** and **19****.** The same elements as those of the above-described embodiments are denoted by the same reference numerals, descriptions of which are omitted here.

In the third embodiment, the upper wire **60** is comprised of the single wire like the above-describe first embodiment and disposed in parallel to the axis line of the front side frames **10.** The lower wire **62** is comprised of first and second split wires **94', 96'** which is similar to the above-described second embodiment. The rear ends of the first and second split wires **94', 96'** are coupled the first mount member **44** which is described above in the second embodiment.

### EMBODIMENT 4

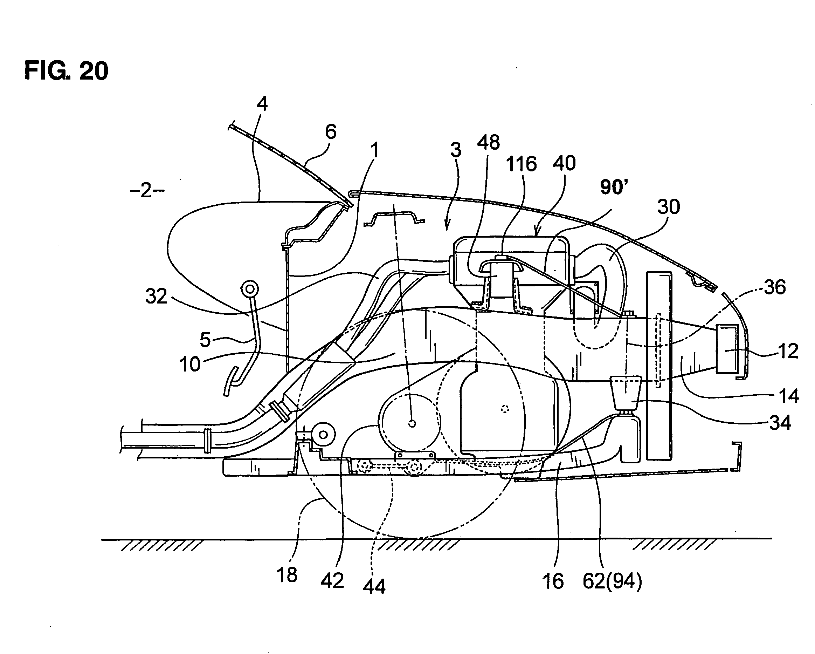

A fourth embodiment will be described referring to FIGS. **20** through **22****.**

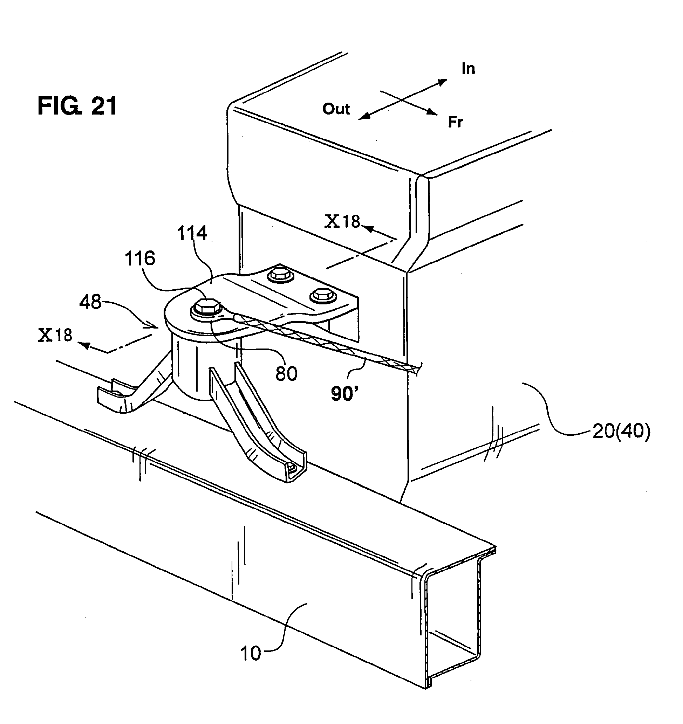

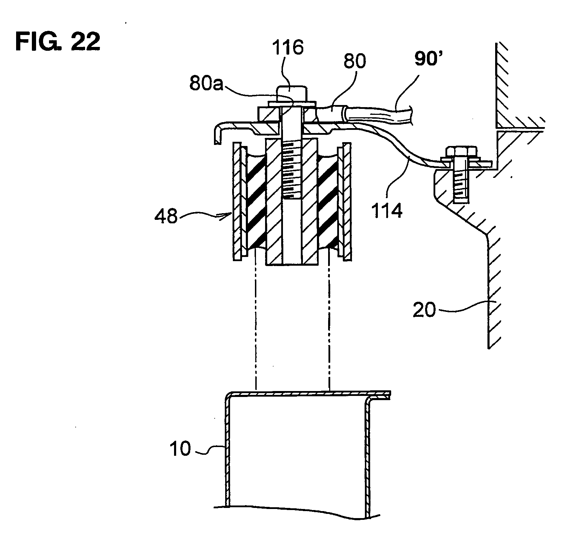

In the fourth embodiment, the upper and lower wires **60, 62** are respectively comprised of two split wires, like the above-described first embodiment. Herein, a rear end of a first upper wire **90'** is coupled to the upper end of the second mount member **48.** Referring to FIG. **21** and **22****,** the engine **20** is mounted at the front side frame **10** via the second mount member **48** which is disposed on the upper face of the front side frame **10.** A horizontal bracket **114** which is preferably fastened by bolts to the end face of the engine **20** is attached to the second mount member **48** via a substantially vertical bolt **116.**

The rear end of the first upper split wire **90'** preferably has the single lock **80.** This single lock **80** is disposed on the horizontal bracket **114,** and then fastened to the second mount member **48** by the vertical bolt **116.**

### EMBODIMENT 5

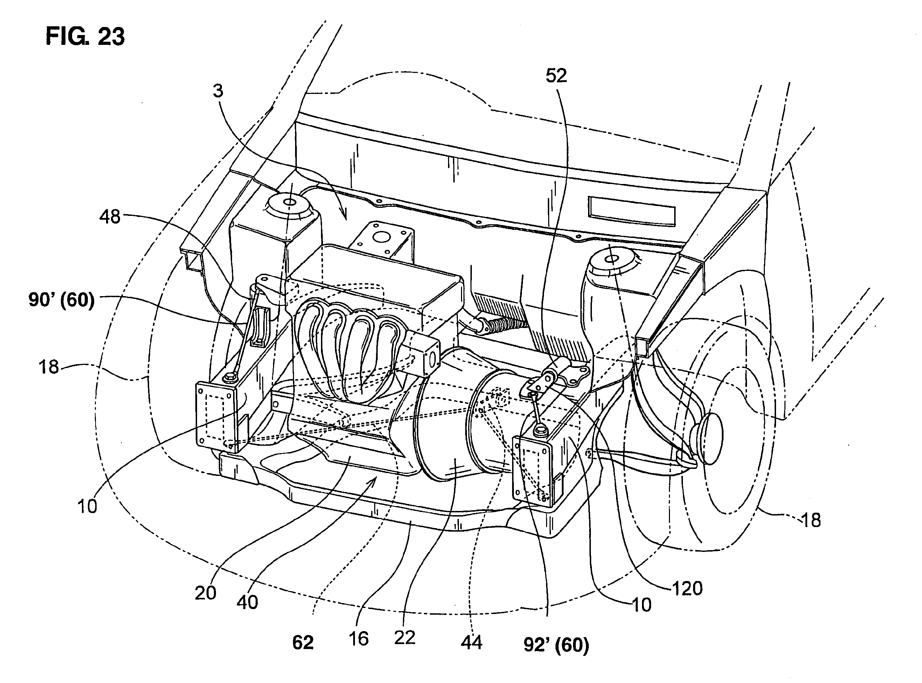

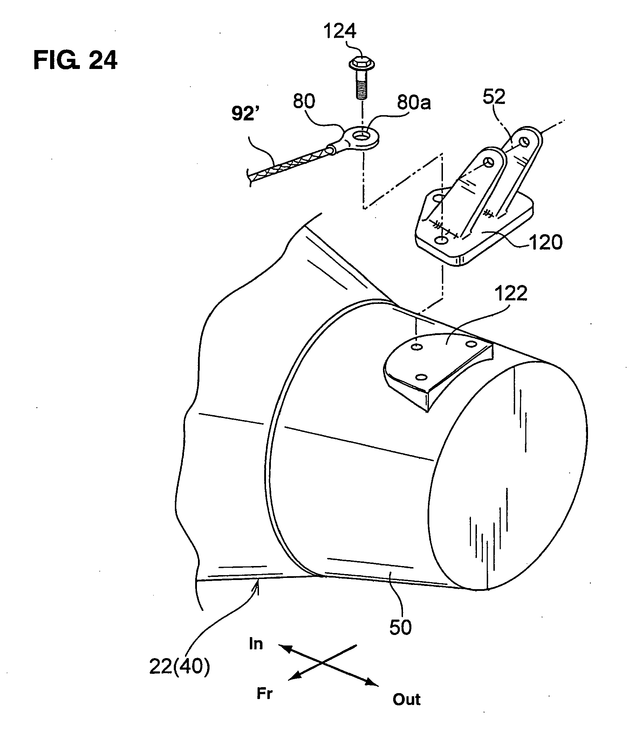

A fifth embodiment will be described referring to FIGS. **23** and **24****.**

In the fourth embodiment, the upper and lower wires **60, 62** are respectively comprised of two split wires, like the forth embodiment. Herein, a rear end of a second upper wire **92'** is coupled to the third mount member **52.** As shown in FIG. **24****,** a bracket **120** is disposed on a seat **122** which is formed at the upper face of the transmission case **50** of the transaxle **22.** The bracket **120** is fixed onto the seat **122** via a bolt **124.** Herein, the rear end of the second upper split wire **92'** has the single lock **80.** The bolt **124** is inserted into the eye **80a** of the single lock **80** and then the bracket **120** is fastened onto the seat **122** of the transaxle **22.** Thus, the rear end of the second upper wire **92'** is coupled to the transaxle **22** via the third mount member **52.**

### EMBODIMENT 6

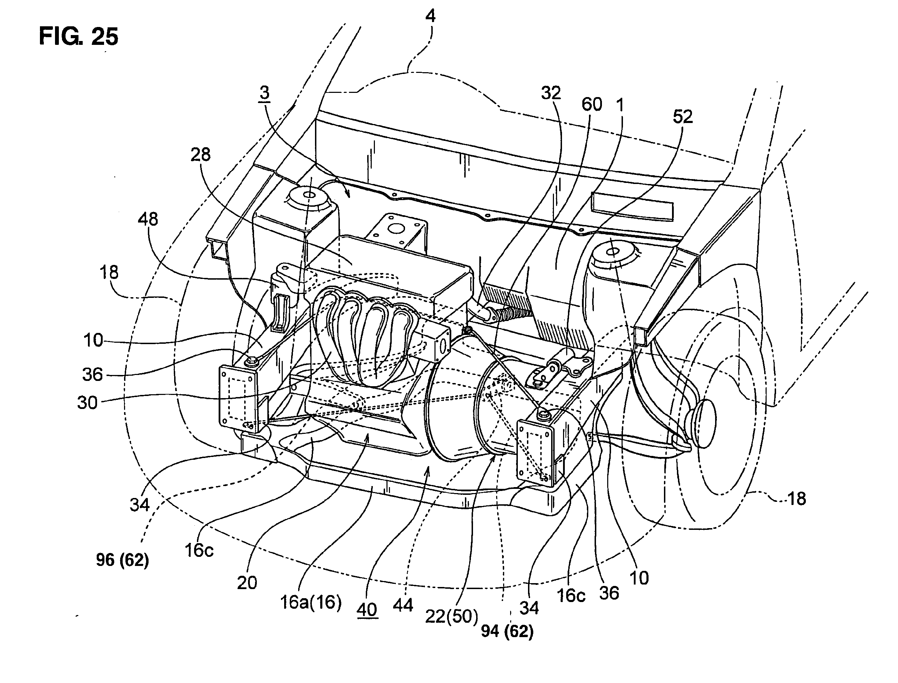

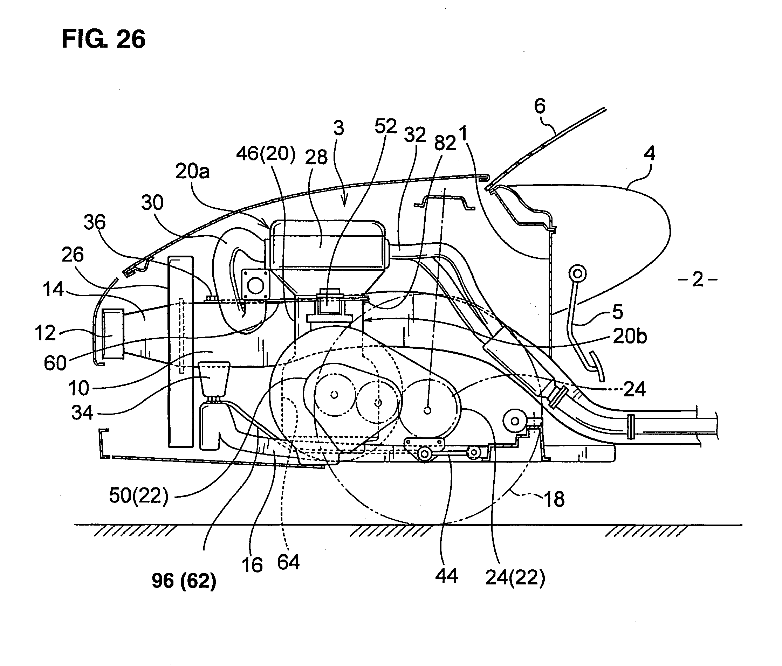

A sixth embodiment will be described referring to FIGS. **25** and **26****.**

In the sixth embodiment, the upper wire **60** is comprised of the single wire like the above-describe first embodiment and disposed in parallel to the axis line of the front side frames **10.** The lower wire **62** is comprised of first and second split wires 94, **96** like the above-described second embodiment. The rear ends of the first and second split wires **94, 96** are coupled the first mount member **44** which is described above in the second embodiment.

The present invention should not be limited to the above-descried embodiments, and any other modifications and improvements may be applied within the scope of the present invention, as defined in the appended claims.

## Claims

1. A front vehicle body structure, comprising:
a power plant **(40; 208)** provided in an engine room **(3)**;
a pair of front side frames **(10, 10; 210, 210)** provided at both sides of a vehicle body, which extends in a longitudinal direction of the vehicle body; and
a flexible tension member **(60; 90, 92; 90', 92'; 62; 94, 96; 94', 96'; 215)** provided between the pair of front side frames **(10, 10; 210, 210)** and the power plant **(40; 208)**, respective ends of which are coupled to the pair of front side frames (**10, 10; 210, 210).**

2. The front vehicle body structure of claim 1, wherein front ends of said flexible tension member **(60; 90, 92; 90', 92'; 62; 94, 96; 94', 96')** are coupled to front end portions of the pair of front side frames **(10, 10)** and/or said flexible tension member comprises a single tension member **(60; 62)**, both ends of which are coupled to said pair of front side frames **(10, 10; 210, 210)**, and/or the single flexible tension member **(60; 62)** extends behind the power plant **(40; 208)**.

3. The front vehicle body structure of any one or more of the preceding claims, wherein said flexible tension member comprises first and second split tension members **(90, 92; 90', 92'; 94, 96; 94', 96')** which are separate from each other and positioned on both sides of the power plant **(40; 208)**, respective front ends of which are coupled to the pair of front side frames **(10, 10; 210, 210),** preferably to front end portions thereof, and respective rear ends of which are coupled to the power plant **(40; 208)** directly or indirectly.

4. The front vehicle body structure of any one or more of the preceding claims, wherein said power plant **(40; 208)** being mounted at said front side frames **(10, 10; 210, 210)** directly or indirectly via mount members **(48, 52)** and/or the rear ends of the first and second split tension members **(90, 92; 90', 92')** are coupled either to said mount members **(48, 52)** or to said power plant **(40; 208)** directly, wherein preferably a rear end of one of said first and second split tension members **(90, 92; 90', 92')** is coupled to said power plant **(40; 208)** and a rear end of the other of the first and second split tension members **(90, 92; 90', 92')** is coupled to one of said mount members **(48; 52)** of said power plant **(40; 208).**

5. The front vehicle body structure of any one or more of the preceding claims, wherein said flexible tension member comprises two sets of flexible tension members **(60, 62; 90, 92, 94, 96; 60, 94', 96'; 90', 92', 94, 96; 60, 94, 96)** which are preferably positioned on an upper side and a lower side of the vehicle body, each set of which is provided between the pair of front side frames **(10, 10; 210, 210)** and the power plant **(40; 208),** wherein said two sets of flexible tension members comprise a single tension member **(60, 62),** respectively, or one, preferably said upper-side positioned flexible tension member comprises a single tension member **(60),** and the other, preferably said lower-side positioned flexible tension member comprises first and second split tension members **(94, 96; 94', 96')** which are separate from each other or said two sets of flexible tension members comprise first and second split tension members **(90, 92, 94, 96; 90', 92', 94, 96),** respectively, which are separate from each other and positioned on both sides of the power plant **(40; 208).**

6. The front vehicle body structure of any one or more of the preceding claims, wherein said pair of front side frames **(10, 10; 210, 210)** has a closed cross section and/or at least a lower-side positioned flexible tension member **(94, 96)** is coupled to a rear end portion of said power plant **(40; 208),** and/or at least the lower-side positioned flexible tension member **(94, 96)** extends in substantially V shape in a plan view.

7. The front vehicle body structure of any one or more of the preceding claims, further comprising a sub frame **(16)** which extends in the vehicle width direction preferably between rear end portions of said pair of front side frames **(10, 10; 210, 210),** and a first mount member **(44)** which mounts a rear end portion of the power plant **(40; 208)** at the sub frame **(16),** wherein said lower-side positioned flexible tension member comprises first and second split tension members **(94**, **96**; **94'**, **96**'**)** which are separate from each other and positioned on both sides of the power plant **(40; 208),** respective front ends of which are coupled to front end portions of the pair of front side frames **(10**, **10; 210, 210)** and respective rear ends of which are coupled to said first mount member **(44).**

8. The front vehicle body structure of any one or more of the preceding claims, further comprising second and third mount members **(48, 52)** which mount the power plant **(40; 208)** at the pair of front side frames **(10, 10; 210, 210)**, respectively, wherein preferably said upper-side positioned flexible tension member comprises first and second split tension members **(90, 92; 90', 92')** which are separate from each other and positioned on both sides of the power plant **(40; 208),** respective rear ends of which are coupled to the second and third mount members **(48, 52),** respectively.

9. The front vehicle body structure of any one or more of the preceding claims, wherein said flexible tension member **(60; 90, 92; 90', 92'; 62; 94, 96; 94', 96')** extends substantially in parallel to an axis line of the front side frames **(10, 10; 210, 210)** in a side view of the vehicle body or said flexible tension member comprises two sets of flexible tension members **(60, 62; 90, 92, 94, 96; 60, 94', 96'; 90', 92', 94, 96; 60, 94, 96)** which are preferably positioned on an upper side and a lower side of the vehicle body, and at least one of said two sets of flexible tension members **(60, 62; 90, 92, 94, 96; 60, 94', 96'; 90', 92', 94, 96; 60, 94, 96)** extends substantially in parallel to the axis line of the front side frames **(10, 10; 210, 210)** in the side view of the vehicle body.

10. The front vehicle body structure of any one or more of the preceding claims, wherein at least one of the front ends of said flexible tension members **(60; 90, 92; 90', 92'; 62; 94, 96; 94', 96')** is coupled to the front side frame **(10),** preferably the front end portion thereof, via a bolt **(36)** which penetrates through the front side frame **(10; 210)** preferably having a closed cross section.

11. The front vehicle body structure of any one or more of the preceding claims, wherein said flexible tension member comprises two sets of flexible tension members **(60, 62; 90, 92, 94, 96; 60, 94'**, **96'; 90', 92', 94, 96; 60, 94, 96)** and said bolt **(36)** is provided so as to penetrate through at least one of the front side frames **(10, 10; 210, 210),** preferably a front end portion thereof, in such a manner that at least one side of the front ends of said upper-side positioned flexible tension member **(60; 90, 92; 90', 92')** and said lower-side positioned flexible tension member **(62; 94, 96; 94', 96')** are coupled to the front side frame **(10; 210)** via an upper portion of the bolt **(36)** and a lower portion of the bolt **(36),** respectively, the upper portion of the bolt **(36)** projecting upward from an upper face of the front side frame **(10; 210),** the lower portion of the bolt **(36)** projecting downward from a lower face of the front side frame **(10; 210).**

12. The front vehicle body structure of any one or more of the preceding claims, wherein at least one of the front ends of said flexible tension members **(60**; **90, 92; 90', 92'; 62; 94, 96; 94', 96'**) has a ring-shaped terminal portion **(80),** and said bolt **(36)** is provided so as to penetrate through the ring-shaped portion **(80)** and the front side frame **(10; 210)**, whereby at least one of the front ends of the flexible tension members **(60; 90, 92; 90', 92'; 62; 94, 96; 94', 96')** is coupled to the front side frame **(10)** via the bolt **(36).**

13. The front vehicle body structure of any one or more of the preceding claims, wherein said power plant comprises a multi-cylinder reciprocating engine **(20),** and said flexible tension member **(60)** is positioned at a level which substantially corresponds to a portion located between a crank case **(64)** and a cylinder head **(28)** of the engine **(20).**

14. A vehicle having a front vehicle body structure according to any one or more of the preceding claims.

15. Method of providing a front vehicle body structure comprising the steps of:
providing a power plant **(40; 208)** in an engine room **(3);**
providing a pair of front side frames **(10, 10; 210, 210)** at both sides of a vehicle body, such that it extends in a longitudinal direction of the vehicle body; and
providing a flexible tension member **(60; 90, 92; 90', 92'; 62; 94, 96; 94', 96')** between the pair of front side frames **(10, 10; 210, 210)** and the power plant **(40; 208),** and coupling respective ends of which to the pair of front side frames **(10, 10; 210, 210).**
